# EUROPEAN PATENT SPECIFICATION

(11) **EP 3 028 835 B1**
(45) Date of publication and mention of the grant of the patent: **04.07.2018**
(21) Application number: 15003403.1
(22) Date of filing: 30.11.2015
(51) Int. Cl.: B29C 51/16

(54) **DEVICE FOR THE MANUFACTURE OF THERMOFORMED CONTAINERS**
VORRICHTUNG ZUR HERSTELLUNG VON WARMGEFORMTEN BEHÄLTERN
DISPOSITIF POUR LA FABRICATION DE RÉCIPIENTS THERMOFORMÉS

(30) Priority: 02.12.2014 ES 201400997
(43) Date of publication of application: 08.06.2016
(73) Proprietor: Mecánica y Tecnología Alimentaria, S.L., 28043 Madrid (ES)
(72) Inventor: Hernández Socastro, José Manuel, 28043 Madrid (ES)
(74) Representative: Maldonado Jordan, Julia

(56) References cited:
- WO-A1-2012/042173
- WO-A1-2013/114033
- DE-A1- 1 704 368

## Description

### Object of the invention.

The object of the invention is a device for the manufacture of containers by means of thermoforming, within a mould with various cavities, where the decorative paper is to be introduced before receiving the plastic material which will be thermoformed in the mould.

The device has peculiarities such that by means of the variation of a minimum number of parts, specifically supporting pins for the decorative paper and the variation of the actuation of the constituting elements, permits to obtain thermoformed containers with decorative paper, so that no step or marking is to be seen in the body of the container maintaining a constant and uniform profile, or with a body with markings but without elements provoking malformations in the body appearing in the same multiple steps which confer to the body of the container an original design, different to what is currently known in the market.

### State of the art.

The document FR 2986176 / WO2013114033 (ERCA) describes a mould for thermoforming applicable to the manufacture of containers by thermoforming, which has a mould body with at least one thermoforming chamber suitable to receive a thermoplastic preform.

Said moulding block comprises at least a main body, at least a moveable bottom part of the mould and at least a retractable member.

The above mentioned moveable part forming the bottom, is moveable in respect to the main body between a closed position against said main body and an open position in which it separates from the main body defining a side opening suitable for the penetration of a retractable member which penetrates through said side opening in the open position of the moveable bottom part of the mould and forming at least a support which can be concealed within the thermoforming chamber.

A drawback of this prior embodiment is precisely determined by the need to separate the bottom moveable part and to form a side opening through which foreign matter can penetrate the mould; with the added risk that in the displacement of the moveable part to the closing position the entrapment of foreign matters may be produced between said moveable part and the moveable body.

The owner of the present invention does not know the existence of prior art embodiments which solve permit to solve in a satisfactory way the drawbacks of the mentioned prior embodiment.

### Description of the invention.

The device for the manufacture of containers by thermoforming which is the subject matter of this invention shows characteristics aimed at solving in a satisfactory way the mentioned drawbacks.

Particularly, the present device corresponds to the type which is described in the introductory part of the first claim, and has features that in opposition to other devices in the market, permit to obtain a thermoformed container which incorporates a decorative paper without the need to displace the bottom of the moveable cavity.

The device of the invention has the peculiarity that the bottom of each moving cavity is fixed on a bottom bearing plate which is not moveable in respect to the moulding body, preventing both its separation from the body of the mould as well as the entry of foreign matters into the moulding cavity as well as the eventual entrapment of said foreign matters between the moveable bottom part and the mould body as it happens in the above mentioned document of the prior art.

In the device of the invention the supporting pins for the decorative paper are provided with rotation shafts permitting its swiveling between an operative position in which the supporting pins are arranged between body of the mould and the bottom of the same and have access to the interior of the mould cavity, forming a support abutment for a decorative paper and a non operating position in which they are arranged outside of the cavity of the mould, having said supporting pins actuation means comprising: an elastic closing ring externally surrounding the supporting pins corresponding to the same moulding cavity, tending to keeping the same in operative or non operative position and an actuation cylinder aligned with the moving cavity and acting by means of a pusher member and a pressure ring on an end of the supporting pins provoking its rotation towards a contrary position whether operative or non operative.

In a first embodiment of the invention the decorative paper is located on the cylindrical part of the mould cavity, being supported on the supporting pins, which before the thermoformation of the container are in an operative position by the action of the elastic ring.

In this case the device is scheduled in order that the actuation cylinder provokes the displacement of the pins supporting the paper towards and operative position, simultaneously with the entry of air into the mould cavities, which permits to obtain a container in which no step or marking is to be observed in the external body of the same, maintaining the container with a constant and uniform profile, to the contrary to other containers incorporating decorative paper.

In a second embodiment, the elastic ring for the actuation of the supporting pins is arranged on said supporting pins so that it tends to keep the pins in a non operative position that is, out of the mould while the actuation of the cylinder provokes the displacement of said supporting pins towards an operative position that is, inside the moulding cavity.

In this case, the device is scheduled in order that the supporting pins remain in an operative position inside the moulding cavity during the operation of thermoformation of the container, so that said container will have markings but without elements would provoking deformations on the container. By means of the linear movement of a wedge system activated by a pneumatic cylinder, the supporting pins carry out a swiveling movement towards the non operative position in the moment of removing the container from the mould.

In this second embodiment, the supporting pins define some markings or recesses on the container which confer to it a higher compression resistance permitting to reduce 10% the thermoplastic material needed for the manufacture of the container.

### Description of the figures.

To complete the description and with the aim to facilitate the understanding of the features of the invention a set of drawings is annexed to this description in which in an illustrative, but not limiting way, the following has been shown:
The invention will be better understood by means of the following description of the annexed drawings in which:
- Figure 1a shows an elevation cross section of a first embodiment of the invention, in a starting step for the manufacture of a container, in which stage the decorative paper is laid on the cavity being supported by the supporting pins.
- Figure 1b shows an elevation cross section of a first embodiment of the invention, in which can be observed how the formation punch deforms the plastic web while entering the cavity.
- Figure 1c shows an elevation cross section of a first embodiment of the invention, in which the container has been totally formed and the decorative paper is located in its final position.
- Figure 2a shows an elevation cross section of a second variant of the device of the invention in an initial stage of manufacture of a container in which the decorative paper is laid on the moulding cavity being supported on the supporting pins.
- Figure 2b is an elevation cross section of the second embodiment of the device showing the punch deforming the plastic web while entering the moulding cavity.
- Figure 2c is an elevation cross section of the second variant of the invention in which the container is already completely formed and the decorative paper is located in its final position. The supporting pins are still in the initial position carrying out small markings or steps in the container.
- Figure 2d is an elevation cross section of the second embodiment of the invention showing that the supporting pins are no longer in its initial position, the cylinder having been actuated and the elastic rings pushing towards the center carrying out a swiveling movement of the supporting pins towards a non operative position, thus releasing the formed container.

### Preferred embodiment of the invention.

In the examples shown in the drawings the device for the manufacture of the thermoformed containers has the elements listed in the following with its corresponding references numerals:
- (1) Moulding body.
- (2) Bronze cover.
- (3) Bottom supporting plate.
- (4) Liner, in the same number as moulding cavities.
- (5) Bottom part, in the same number as moulding cavities.
- (6) Clamp for the attachment of the bottom part.
- (7) Cylinder support.
- (8) Cylinder.
- (9) Supporting pins.
- (10) Elastic ring to close the supporting pins.
- (11) Opening pusher member.
- (12) Pressure pins.
- (13) Rotation pin.
- (14) Formation punch, in the same number as moulding cavities.
- (15) Decorative paper.
- (16) Plastic web.

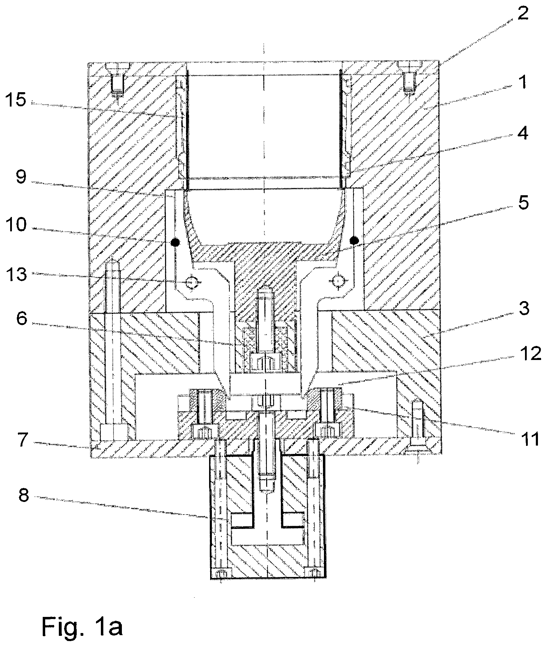

Figure 1a shows a first embodiment of the device of the invention in a first manufacturing stage of a container, in which the decorative paper (15) is introduced within the cavity of the mould (1), adapted to the liner (4) and engaging supporting pins (9).

The mechanical elements actuating the device are in a standby stage. No action is made on the cylinder (8) secured to the supporting plate (7). The pusher (11) is attached to the cylinder and a pressure ring (12) transmitting the movement of the cylinder (8) to the supporting pins (9) is attached to said pusher. The supporting pins are provided with rotation shafts (13) which allow its swiveling to be positioned between the liner (4) and the bottom member (5), said bottom member being secured to the bottom supporting plate (3) by means of a clamp (6) for securing the bottom members. Around said supporting pins (10) an elastic ring is arranged to assist the closing of said supporting pins in the initial stage.

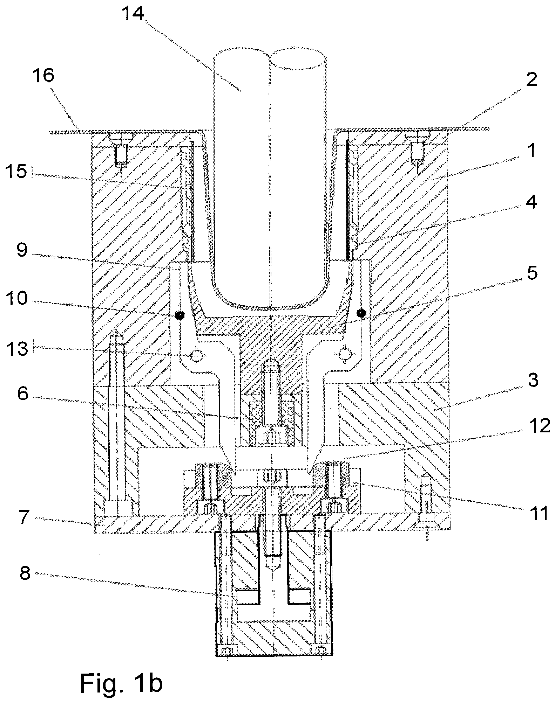

Figure 1b shows the second stage; when the deformation of the plastic web (16) is carried out by the action of the punch (14).

The punch (14) pushes the plastic web (16) towards the interior of the cavity of the mould (1), said web being initially supported on the cover (2). In this stage all of the other elements are precisely positioned as has been discussed in Figure 1a. The decorative paper (15) is located within the cavity of the mould engaging the supporting pins (9) and the cylinder (8) continues in its rest position.

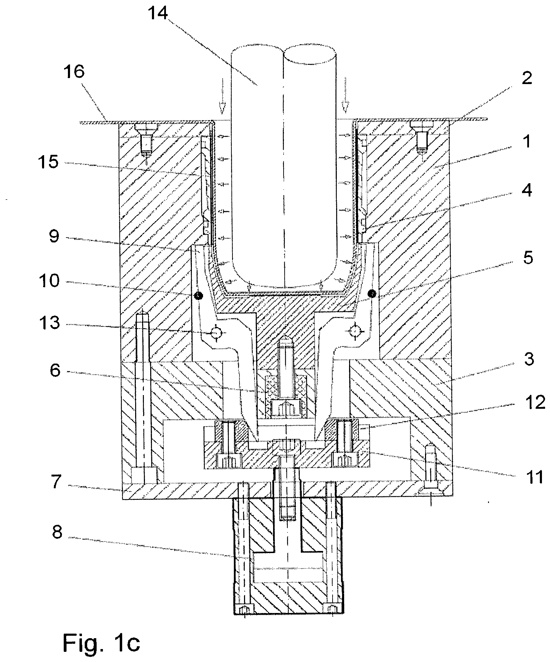

Figure 1c shows the third and last stage; in which air is introduced provoking the expansion of the plastic web (16) adopting the form of the liner (4) and of the bottom part (5) resulting the decorative paper (15) adhered to said web.

The punch (14) reaches its maximum travel, in which occasion air under pressure is introduced around said punch, said pressure provoking the plastic web (16) to expand until contacting all faces of the cavity.

Then, the mechanical elements of the device carry out its working circle; the cylinder (8) is pneumatically activated, this provoking that the members attached to it, that is the pusher member (11) and the pressure ring (12) carry out a linear movement in the vertical sense. This movement is directly transmitted to the supporting pins (9) which by means of their rotating pins (13) perform a swiveling movement.

Said swiveling movement provokes the support pins (9) to leave its initial position between the liner (4) and the fixed bottom part (5) and conceal themselves within the mould body (1).

In this way, a container is obtained with an external decorative paper without leaving any marks in the container and obtaining a uniform and smooth body.

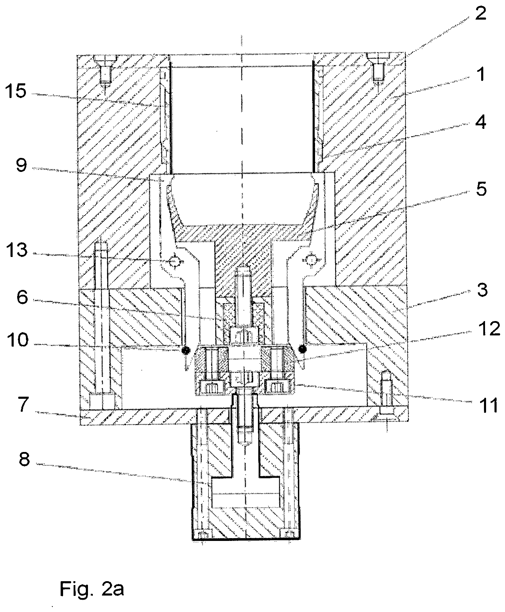

Figure 2a shows the first stage in which the paper (15) is introduced within the mould cavity (1), adapting itself to the shape of the liner (4) and engaging the supporting pins (9).

The cylinder (8), secured to the support plate (7), is actuated and finds itself in its advancement position. The elastic ring (10) acts on the lower part of the supporting pins assisting in exerting a given pressure against pressure ring (12).

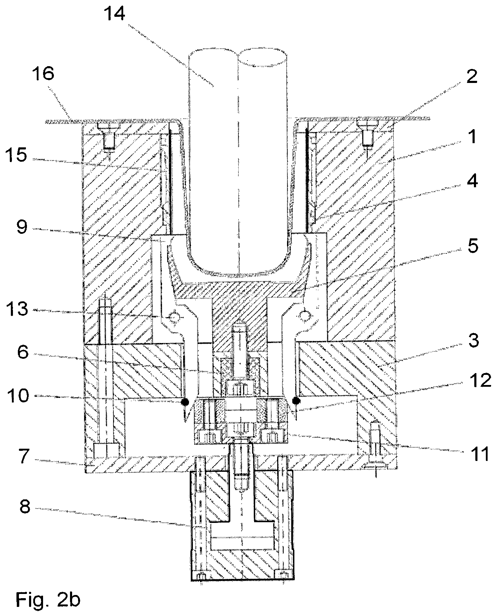

Figure 2b shows the second stage; in which the deformation of the plastic web (16) is made by means of the punch (14). The punch (14) pushes the plastic web (16) towards to the interior of the moulding cavity (1), being said plastic web initially supported on the cover (2), remaining the rest of members in the same position as shown in Figure 2a. The decorative paper (15) is within the moulding cavity engaging the supporting pins (9) and the cylinder (8) remains in its initial position.

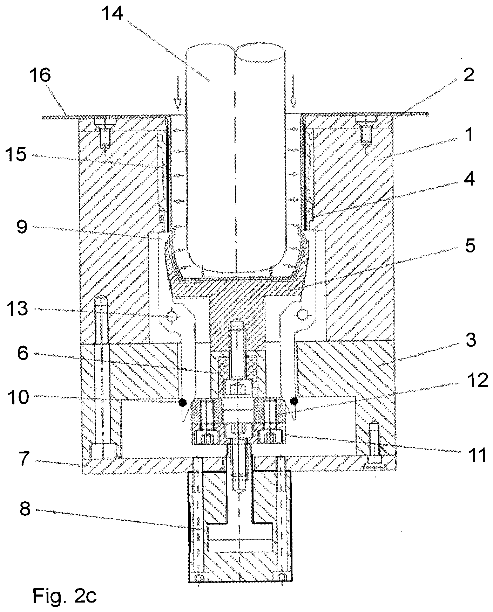

Figure 2c shows the third stage in which the introduction of air provokes the expansion of the plastic web (16), adopting the form of the liner (4) and of the bottom part (5) and leaving the decorative paper (15) adhered to said web.

The punch (14) reaches its maximum travel, being in this occasion that air under pressure is introduced around said punch producing the plastic web (16) to expand until contacting the whole surface of the cavity. In this step, all of the other elements are exactly positioned as described in Figure 2a, the supporting pins (9) remaining within the cavity of the mould to define multiple steps on the body of the container.

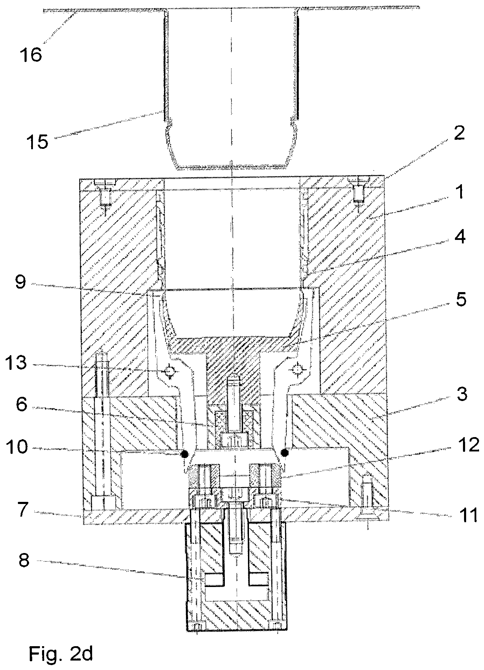

Figure 2d shows the fourth and last stage; in this occasion the cylinder (8) is pneumatically actuated displacing the pusher (11) and the pressure ring (12) with a linear opening movement.

Said movement provokes that the pressure ring (12) stops to exert pressure on the supporting pins (9) and that the elastic ring (10) produces the rotation of the supporting pins around their corresponding rotating pins (13), so as to leave the moulding cavity passing to a non operative position which facilitates the extraction of the container from the mould.

## Claims

1. Device for the manufacture of thermoformed containers; comprising: a moulding body (1) having at least one moulding cavity with an internal liner (4), and a bottom part (5) for each moulding cavity, supporting pins displaceable between an operative position in which the pins are arranged between the moulding body and its bottom part, entering the moulding cavity forming a support abutment for a sheet of decorative paper and a non operative position in which the supporting pins are arranged outside of the moulding cavity and a formation punch (14) for the deformation of a plastic web (16) aimed at forming the container inside of the mould; **characterized in that** the bottom part is secured to a bottom bearing plate (3) without possibility of movement in respect to the body of the mould (1); the supporting pins for the decorative paper being provided with rotating pins (13) permitting its swiveling towards and operative position between the liner (4) and the bottom member (5); said supporting pins having actuation means comprising: an elastic ring (10) externally surrounding the supporting pins corresponding to the same moulding cavity, keeping them whether in an operative position or in a non operative position, and an actuation cylinder (8) aligned with the moulding cavity and acting by means of a pusher (11) and a pressure ring (12) on an end of the supporting pins (9) provoking its swiveling movement towards an opposed operative or non operative position.

2. Device, according to claim 1, **characterized in that** the cylinder (8) for the actuation of the supporting pins is secured to a support plate (7) opposite to the bottom bearing plate (3) and attached to the same.

## Patentansprüche

1. Vorrichtung zur Herstellung von warmgeformten Behältern; umfassend: einen Formkörper (1) mit mindestens einem Formhohlraum mit einer Innenauskleidung (4), und einen Bodenteil (5) für jeden Formhohlraum, Tragbolzen, die zwischen einer Betriebsposition, in der die Bolzen zwischen dem Formkörper und seinem Bodenteil angeordnet sind, wobei sie in den Formhohlraum eintreten und einen Stützanschlag für ein Dekorpapierblatt bilden, und einer Ruheposition verschiebbar sind, in der die Tragbolzen außerhalb des Formhohlraums und einer Formstanze (14) zur Verformung einer Kunststofffolie (16) angeordnet sind, um den Behälter innerhalb der Form zu bilden; **dadurch gekennzeichnet, dass** der Bodenteil an der Bodentragplatte (3) ohne mögliche Bewegung bezüglich des Körpers der Form (1) befestigt ist; wobei die Tragbolzen für das Dekorpapier mit rotierenden Bolzen (13) bereitgestellt sind, wodurch ihr Schwenken in Richtung und die Betriebsposition zwischen der Auskleidung (4) und dem Bodenteil (5) erlaubt wird; wobei die Tragbolzen Betätigungsmittel haben, die Folgendes umfassen; einen elastischen Ring (10), der die Tragbolzen extern umgibt, die dem gleichen Formhohlraum entsprechen, der sie entweder in einer Betriebsposition oder einer Ruheposition hält, und einen Betätigungszylinder (8), der mit dem Formhohlraum ausgerichtet ist und durch Mittel eines Drückers (11) und eines Druckrings (12) auf ein Ende der Tragbolzen (9) wirkt, wodurch ihre Schwenkbewegung in Richtung einer entgegengesetzten Betriebs- und Ruheposition provoziert wird.

2. Vorrichtung nach Anspruch 1, **dadurch gekennzeichnet, dass** der Zylinder (8) für die Betätigung der Tragbolzen in einer Trägerplatte (7) gegenüber der Bodentragplatte (3) befestigt ist und an der gleichen angebracht ist.

## Revendications

1. Dispositif pour la fabrication de conteneurs thermoformés ; comprenant : un corps de moulage (1) ayant au moins une cavité de moulage avec une doublure interne (4), et une partie inférieure (5) pour chaque cavité de moulage, des goupilles de support déplaçables entre une position fonctionnelle dans laquelle les goupilles sont disposées entre le corps de moulage et sa partie inférieure, pénétrant la cavité de moulage formant une butée de support pour une feuille de papier décoratif et une position non fonctionnelle dans laquelle les goupilles de support sont disposées à l'extérieur de la cavité de moulage et un poinçon de formage (14) pour la déformation d'une bande de plastique (16) destinée à former le conteneur à l'intérieur du moule ; **caractérisé en ce que** la partie inférieure est fixée à une plaque portante inférieure (3) sans la possibilité de mouvement par rapport au corps du moule (1) ; les goupilles de support pour le papier décoratif étant pourvues de goupilles de rotation (13) permettant leur pivotement vers une position fonctionnelle entre la doublure (4) et le membre inférieur (5) ; lesdites goupilles de support ayant des moyens d'actionnement comprenant : un anneau élastique (10) entourant extérieurement les goupilles de support correspondant à la même cavité de moulage, les maintenant soit dans une position fonctionnelle soit dans une position non fonctionnelle et un vérin d'actionnement (8) en alignement avec la cavité de moulage et agissant aux moyens d'un poussoir (11) et d'un anneau de pression (12) sur une extrémité des goupilles de support (9) provoquant son mouvement de pivotement vers une position opposée fonctionnelle ou non fonctionnelle.

2. Dispositif, selon la revendication 1, **caractérisé en ce que** le cylindre (8) pour l'actionnement des goupilles de support est fixé à une plaque de support (7) en regard de la plaque portante inférieure (3) et relié à cette dernière.
